# EUROPÄISCHE PATENTANMELDUNG

(11) **EP 1 612 964 A1**
(43) Veröffentlichungstag der Anmeldung: **04.01.2006**
(21) Anmeldenummer: 04015137.5
(22) Anmeldetag: 28.06.2004
(51) Int. Cl.: H04B 7/005, H04L 1/00

(54) **Verfahren zum Ermitteln eines Wertes der Sendeleistung für ein von einer sendenden Station an eine empfangende Station zu sendendes Signal sowie Vorrichtung**

(71) Anmelder: SIEMENS AKTIENGESELLSCHAFT, 80333 München (DE)
(72) Erfinder: Schulz, Egon, Dr., 80993 München (DE); Zirwas, Wolfgang, 82194 Gröbenzell (DE)

(57) **Zusammenfassung**

Bei einem Verfahren zum Ermitteln eines Wertes der Sendeleistung für ein von einer sendenden Station (NodeB) an eine empfangende Station (UE) zu sendendes Signal (S1, S2, S3) wird senderseitig für einen ersten Wert der Sendeleistung die Lage eines voraussichtlichen ersten Wertes (P1, P2, P3)der Empfangsleistung der empfangenden Station (UE) in einem vorgegebenen Empfangsleistungsintervall (I1, I2, I3) geschätzt. Erfindungsgemäß wird ein zum Senden zu verwendender zweiter Wert der Sendeleistung senderseitig derart ermittelt, dass bei dessen Verwendung ein voraussichtlicher zweiter Wert (P1', P2', P3') der Empfangsleistung näher an der Mitte des vorgegebenen Empfangsleistungsintervall (I1, I2, I3) liegt, als der voraussichtliche erste Wert (P1, P2, P3)der Empfangsleistung.

## Beschreibung

Die Erfindung betrifft ein Verfahren zum Ermitteln eines Wertes der Sendeleistung für ein von einer sendenden Station an eine empfangende Station zu sendendes Signal sowie eine entsprechende Vorrichtung.

Eine der wichtigsten Techniken im Funkressourcenmanagement von Funkkommunikationssystemen ist die Anpassung von Übertragungstechniken an die aktuellen Übertragungsbedingungen der verwendeten Funkkanäle. In der Fachwelt wird hierfür der englische Begriff "Link Adaptation" verwendet. Link Adaptation ermöglicht insbesondere eine Maximierung des Datendurchsatzes in Abhängigkeit von den aktuellen Übertragungsbedingungen eines Funkkanals. Link Adaptation ist beispielsweise für HiperLAN (High Performance Radio Local Area Network) und für HSDPA (High Speed Downlink Packet Access) standardisiert und erfolgt beispielsweise durch Anpassung des für die Funkübertragung verwendeten Modulationsformates oder der Codierrate.

In OFDM-Systemen (OFDM: Orthogonal Frequency Division Multiplex) werden Symbole von einer sendenden an eine empfangende Station übertragen. Jedes Symbol setzt sich aus mehreren Signalen zusammen, die über jeweils einen Subträger übertragen werden. Die Subträger sind zueinander orthogonal und verwenden unterschiedliche Trägerfrequenzen, so dass bei einem frequenzabhängigen Übertragungskanal unterschiedliche Übertragungsbedingungen für die einzelnen Subträger auftreten können. Aufgrund dieser Frequenzabhängigkeit des Übertragungskanals muss Link Adaptation für jeden Subträger individuell durchgeführt werden. Hierzu ist in der sendenden Station Kenntnis über den Zustand des Übertragungskanals (CSI: Channel State Information) für jeden einzelnen Subträgers erforderlich. In TDD-Systemen (TDD: Time Division Duplex) erhält die sendende Station, beispielsweise eine Basisstation, Kanalzustandsinformationen z.B. durch Kanalschätzung des Übertragungskanals in Aufwärtsrichtung (UL: uplink), d.h. von der empfangenden zur sendenden Station. In FDD-Systemen (Frequency Division Duplex) werden für Übertragungen in Abwärtsrichtung (DL: downlink), d.h. von der sendenden zur empfangenden Station, andere Frequenzen verwendet als in Aufwärtsrichtung. Daher benötigt die sendende Station eine Rückmeldung von der empfangenden Station über die von der empfangenden Station ermittelten Eigenschaften des Übertragungskanals. Anhand in der sendenden Station vorliegender Kanalzustandsinformationen für die einzelnen Subträger kann beispielsweise für jeden Subträger individuell ein Modulationsverfahren für die zu sendenden Signale in Abhängigkeit von den aktuellen Kanalbedingungen ausgewählt werden.

Damit die empfangende Station beim Empfang der Signale der Subträger für jedes der Signale das dem Subträger entsprechende Modulationsverfahren verwendet, muss eine Information über das Modulationsverfahren direkt oder indirekt von der sendenden Station an die empfangende Station übermittelt werden. Eine direkte Mitteilung bedeutet in diesem Fall, dass die sendende Station der empfangenden Station die für jeden Subträger verwendete Modulationsart explizit signalisiert. Dies ist insbesondere dann von Nachteil, wenn eine große Anzahl von Subträgern und zeitlich sich schnell ändernde Übertragungsbedingungen vorliegen. In diesem Fall entstünde eine extrem hohe Signalisierungslast. Eine andere Möglichkeit besteht in so genannten blind detection schemes, bei denen das verwendete Modulationsverfahren von der empfangenden Station für die einzelnen Subträger geschätzt wird. Dies erfolgt beispielsweise dadurch, dass Empfangsleistungsintervalle festgelegt sind, denen jeweils ein bestimmtes Modulationsverfahren zugeordnet ist und die sowohl der sendenden als auch der empfangenden Station im Vornherein bekannt sind. Die sendende Station schätzt für jeden Subträger aufgrund der ihr bekannten jeweiligen Übertragungsbedingungen die jeweilige Empfangsleistung der empfangenen Station und wählt zur nachfolgenden Übertragung jeweils das Modulationsverfahren aus, das dem Empfangsleistungsintervall zugeordnet ist, indem der jeweilige geschätzte Empfangsleistungswert liegt. Die empfangene Station misst die Empfangsleistung der auf den Subträgern empfangenen Signale und verwendet zur Demodulation der Signale jeweils das Demodulationsverfahren, das dem Modulationsverfahren des entsprechenden Empfangsleistungsintervalls entspricht, in dem die jeweils gemessene Empfangsleistung liegt.

Fehler bei der Auswahl des Demodulationsverfahrens durch die empfangende Station können dadurch entstehen, dass die von der sendenden Station geschätzte Empfangsleistung in einem anderen Empfangsleistungsintervall liegt, als die tatsächlich von der empfangenden Station gemessene Empfangsleistung. Dies kommt beispielsweise dann vor, wenn bei der Übertragung von der sendenden Station an die empfangende Station andere Übertragungsbedingungen herrschen, als dies von der sendenden Station aufgrund der ihr bekannten Übertragungsbedingungen angenommen wurde.

Der Erfindung liegt daher die Aufgabe zugrunde, ein vorteilhaftes Verfahren zum Ermitteln eines Wertes der Sendeleistung für ein von einer sendenden Station an eine empfangende Station zu sendendes Signal sowie eine entsprechende Vorrichtung anzugeben, mittels derer der empfangenden Station ermöglicht wird, das von der sendenden Station verwendete Modulationsverfahren mit einer gegenüber bekannten Verfahren verringerten Fehlerwahrscheinlichkeit zu ermitteln.

Diese Aufgabe wird mit dem Verfahren sowie der Vorrichtung gemäß den unabhängigen Ansprüchen gelöst.

Vorteilhafte Ausgestaltungen und Weiterbildungen der Erfindung sind Gegenstand der abhängigen Ansprüche.

Bei dem erfindungsgemäßen Verfahren zum Ermitteln eines Wertes der Sendeleistung für ein von einer sendenden Station an eine empfangende Station zu sendendes Signal wird senderseitig für einen ersten Wert der Sendeleistung die Lage eines voraussichtlichen ersten Wertes der Empfangsleistung der empfangenden Station in einem vorgegebenen Empfangsleistungsintervall geschätzt. Erfindungsgemäß wird ein zum Senden zu verwendender zweiter Wert der Sendeleistung senderseitig derart ermittelt, dass bei dessen Verwendung ein voraussichtlicher zweiter Wert der Empfangsleistung näher an der Mitte des vorgegebenen Empfangsleistungsintervall liegt, als der voraussichtliche erste Wert der Empfangsleistung.

Durch die Erfindung wird erreicht, dass die Wahrscheinlichkeit dafür verringert wird, dass der von der empfangenden Station tatsächlich gemessene Wert der Empfangsleistung in einem anderen als dem von der sendenden Station aufgrund der Schätzung ermittelten Empfangsleistungsintervall liegt. Soll die empfangende Station beispielsweise je nach anhand des gemessenen Wertes der Empfangsleistung ermitteltem vorgegebenem Empfangsleistungsintervall unterschiedliche Maßnahmen durchführen, so ist durch die Erfindung die Wahrscheinlichkeit erhöht, dass diejenige Maßnahme durchgeführt wird, die dem von der sendenden Station aufgrund der Schätzung ermittelten Empfangsleistungsintervall zugeordnet ist. Unter derartigen Maßnahmen ist beispielsweise jede Form der Steuerung der empfangenden Station zu verstehen, die nur dann erfolgen soll und/oder eine gewünschte Wirkung erzielt, wenn das von der sendenden Station geschätzte Empfangsleistungsintervall mit dem von der empfangenden Station ermittelten Empfangsleistungsintervall übereinstimmt.

Unter dem Schätzen der Lage des voraussichtlich ersten Wertes der Empfangsleistung in dem vorgegebenen Empfangsleistungsintervall kann sowohl das Schätzen eines konkreten Zahlenwertes für den ersten Wert der Empfangsleistung als auch ein Schätzen der relativen Lage des ersten Wertes der Empfangsleistung bezüglich der Intervallgrenzen des vorgegebenen Empfangsleistungsintervalls verstanden werden. Im letzteren Fall ist eine Kenntnis eines konkreten Zahlenwertes des ersten Wertes der Empfangsleitung nicht erforderlich.

Besonders vorteilhaft ist es, wenn eine zum Senden des Signal verwendete Modulationsart senderseitig in Abhängigkeit davon gewählt wird, in welchem von wenigstens zwei vorgegebenen Empfangsleistungsintervallen der senderseitig für den ersten Wert der Sendeleistung geschätzte voraussichtliche erste Wert der Empfangsleistung liegt. Die empfangende Station kann durch die Erfindung anhand der gemessenen Empfangsleistung mit einer geringeren Fehlerwahrscheinlichkeit das von der sendenden Station geschätzte Empfangsleistungsintervall ermitteln und diejenige Modulationsart auswählen, die diesem Empfangsleistungsintervall zugeordnet ist. Eine entsprechende Tabelle über eine Zuordnung von Empfangsleistungsintervallen zu Modulationsarten ist beispielsweise sowohl in der sendenden als auch in der empfangenden Station gespeichert.

In einer Weiterbildung der Erfindung wird der zum Senden zu verwendende zweite Wert der Sendeleistung senderseitig so ermittelt, dass bei dessen Verwendung der voraussichtliche zweite Wert der Empfangsleistung im Wesentlichen in der Mitte des vorgegebenen Empfangsleistungsintervalls liegt. Auf diese Weise wird der Abstand des voraussichtlichen zweiten Wertes der Empfangsleistung sowohl zur oberen als auch zur unteren Grenze des entsprechenden vorgegebenen Empfangsleistungsintervalls maximiert. Die Wahrscheinlichkeit, dass die empfangende Station beispielsweise aufgrund von sich ändernden Übertragungsbedingungen oder aufgrund von Messfehlern ein anderes Empfangsleistungsintervall ermittelt, als von der sendenden Station geschätzt wurde, wird durch diese Weiterbildung der Erfindung minimiert.

Es ist von Vorteil, wenn die Verfahrensschritte entsprechend für weitere Signale durchgeführt werden, die gleichzeitig mit dem Signal von der sendenden Station an die empfangende Station gesendet werden, wobei ein von der sendenden Station zu übertragendes Symbol aus all diesen Signalen zusammengesetzt ist, und die Signale mittels unterschiedlicher Trägerfrequenzen gesendet werden. Auf diese Weise kann die Erfindung beispielsweise in einem OFDM-System eingesetzt werden. In einem OFDM-System wird ein OFDM-Symbol aus mehreren Signalen gebildet, die jeweils auf einem Subträger, d.h. mit unterschiedlichen Trägerfrequenzen, übertragen werden. Aufgrund der Frequenzabhängigkeit des Übertragungskanals weist jeder Subträger individuelle Übertragungseigenschaften auf. Für die auf den Subträgern gesendeten Signale kann daher unter Berücksichtigung der aktuellen Übertragungsbedingungen individuell ein besonders günstiges Modulationsverfahren ausgewählt werden.

Dadurch, dass der zweite Wert der Sendeleistung der einzelnen Signale sowohl größer als auch kleiner als der erste Wert der Sendeleistung sein kann, ist bei der Durchführung des erfindungsgemäßen Verfahrens, beispielsweise in einem OFDM-System, im Mittel nur wenig bis gar keine zusätzliche oder sogar eine geringere Sendeleistung erforderlich. Erhöhungen und Erniedrigungen des jeweils zweiten Wertes der Sendeleistung für Signale der einzelnen Subträger gegenüber dem ersten Wert der Sendeleistung ergeben bei einer Vielzahl von Subträgern (z.B. 64) mit jeweils individuellen Übertragungseigenschaften im Mittel eine Änderung der Gesamtsendeleistung der sendenden Station, die in der Nähe von 0 dB liegt.

Es ist zweckmäßig, dass als Signal und als weitere Signale Pilotsignale verwendet werden. Pilotsignale dienen der empfangenden Station zur Schätzung des Übertragungskanals bei der für das jeweilige Pilotsignal verwendeten Frequenz. Durch die Erfindung können Pilotsignale zusätzlich zur Kanalschätzung auch zum empfängerseitigen Ermitteln und Auswählen von der sendenden Station verwendeter Modulationsverfahren eingesetzt werden. Beispielsweise überträgt die sendende Station nach zunächst Pilotsignale auf den Subträgern eines OFDM-Systems. Nachfolgend sendet die sendende Station Signale eines z.B. Nutzdaten tragenden OFDM-Symbols auf den Subträgern und verwendet für diese Signale jeweils ein Modulationsverfahren, das dem für das entsprechende Pilotsignal senderseitig geschätzten Empfangsleistungsintervall entspricht. Die empfangende Station ermittelt anhand der gemessenen Empfangsleistung der Pilotsignale jeweils vorgegebene Empfangsleistungsintervalle sowie die den Empfangsleistungsintervallen zugeordneten Modulationsverfahren und verwendet nachfolgend die ermittelten Modulationsverfahren für die auf den Subträgern empfangenen Signale des Nutzdaten tragenden OFDM-Symbols. Ein Ermitteln der Empfangsleistung der Signale des Nutzdaten tragenden OFDM-Symbols ist aufgrund der Erfindung nicht erforderlich. Es ist sinnvoll, dass die sendende Station die Pilotsignale mit einer Wiederholrate sendet, die umso größer ist je schneller sich die Übertragungseigenschaften für Signale der Subträger ändern.

Änderungen der Übertragungseigenschaften und Messungenauigkeiten können dazu führen, dass die empfangende Station eine andere Empfangsleistung misst, als von der sendenden Station geschätzt wurde. Dieses Problem tritt insbesondere bei kleinen Empfangsleistungen und einem schlechten Signal-zu-RauschVerhältnis auf. Es ist daher zweckmäßig, dass ein erstes vorgegebenes Empfangsleistungsintervall breiter ist als ein zweites vorgegebenes Empfangsleistungsintervall und dass gleichzeitig die Empfangsleistungen des ersten vorgegebenen Empfangsleistungsintervalls kleiner sind, als die Empfangsleistungen des zweiten vorgegebenen Empfangsleistungsintervalls.

In einer Ausgestaltung der Erfindung wird als erster Wert der Sendeleistung ein vorbestimmter Wert verwendet. Der vorbestimmte Wert kann für das Signal und für die weiteren Signale sowohl gleich als auch unterschiedlich sein.

Die erfindungsgemäße Vorrichtung weist alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

Die Vorrichtung kann sowohl in der sendenden Station als auch in einer mit der sendenden Station verbundenen Einrichtung angeordnet sein. Eine Verbindung zwischen der sendenden Station und der Einrichtung erfolgt im letztgenannten Fall beispielsweise leitungsgebunden oder über eine Luftschnittstelle.

Die Erfindung wird im Folgenden anhand von in den Figuren dargestellten Ausführungsbeispielen näher erläutert. Es zeigen:
- Figur 1: eine schematische Darstellung einer Übertragung eines aus mehreren Signalen gebildeten Symbols von einer sendenden an eine empfangende Station,
- Figur 2: eine schematische Darstellung von vorgegebenen Empfangsleistungsintervallen und von der sendenden Station geschätzter erster und zweiter Werte der Empfangsleistungen für Signale unterschiedlicher Subträger eines gemäß Figur 1 übertragenen Symbols.

Gleiche Bezugszeichen in den Figuren bezeichnen gleiche Gegenstände.

Als empfangende Station wird nachfolgend eine Teilnehmerstation betrachtet, ohne jedoch damit zum Ausdruck bringen zu wollen, dass die Erfindung hierauf beschränkt sein soll.

Eine Teilnehmerstation ist beispielsweise ein Mobiltelefon oder auch eine ortsbewegliche oder ortsfeste Vorrichtung zur Übertragung von Bild- und/oder Tondaten, zum Fax-, Short Message Service SMS- und/oder Email-Versand und/oder zum Internet-Zugang.

Als sendende Station wird nachfolgend eine Basisstation betrachtet, ohne jedoch damit zum Ausdruck bringen zu wollen, dass die Erfindung hierauf beschränkt sein soll.

Eine Basisstation ist eine netzseitige Einrichtung eines Funkkommunikationssystems, die Mittel aufweist, um mit einer Teilnehmerstation eine Funkverbindung aufzubauen und Nutz-und/oder Signalisierungsdaten auszutauschen.

Die Erfindung kann vorteilhaft in beliebigen Funkkommunikationssystemen verwendet werden. Unter Funkkommunikationssystemen sind Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communications) oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronical Engineers) 802.11a-i, HiperLAN1 und HiperLAN2 sowie Bluetooth-Netze.

Im Folgenden wird die Erfindung am Beispiel eines Mobilfunksystems beschrieben, das OFDM zur Übertragung von Informationseinheiten, beispielsweise von Bits, verwendet, ohne jedoch damit zum Ausdruck bringen zu wollen, dass die Erfindung hierauf beschränkt sein soll.

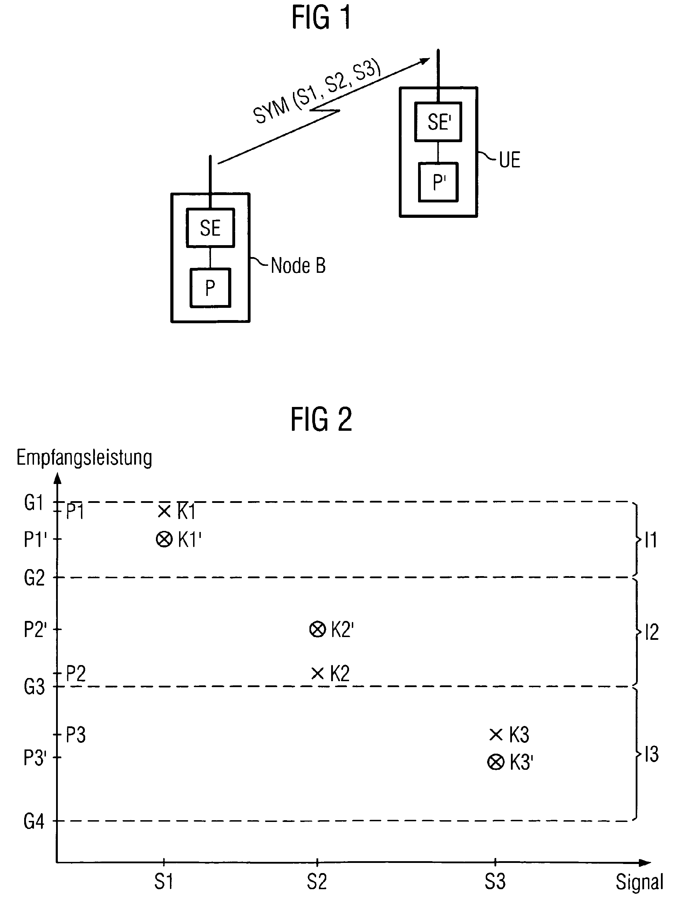

Figur 1 zeigt schematisch eine Basisstation NodeB, die ein Symbol SYM an eine Teilnehmerstation UE über eine Funkverbindung überträgt. Das übertragende Symbol SYM setzt sich aus drei Signalen S1, S2, S3 zusammen, die jeweils auf einem Subträger gesendet werden, d.h. jeweils auf eine Trägerfrequenz aufmoduliert werden. Die Teilnehmerstation UE rekonstruiert das von der Basisstation NodeB übertragende Symbol SYM aus den demodulierten Signalen S1, S2, S3.

Die Basisstation NodeB weist eine Sende- und Empfangseinheit SE auf, die von einem Prozessor P gesteuert wird. Die Teilnehmerstation UE weist ebenfalls eine Sende- und Empfangseinheit SE' sowie einen Prozessor P' zur Steuerung ihrer Sende-und Empfangseinheit SE' auf. Der Basisstation NodeB sind Kanalzustandsinformationen (CSI: Channel State Information) für jeden der drei Subträger bekannt. Die Kanalzustandsinformationen werden entweder von der Teilnehmerstation UE gemessen und an die Basisstation NodeB signalisiert oder von der Basisstation NodeB selbst bestimmt. Mittels ihres Prozessors P stellt die Basisstation NodeB für jeden der drei Subträger einen Wert für die Sendeleistung der Signale S1, S2, S3 ein.

Ein Ausführungsbeispiel einer erfindungsgemäßen Einstellung der Sendeleistung für die von der Basisstation NodeB übertragenen Signale S1, S2, S3 wird im Folgenden anhand von Figur 2 erläutert.

In dem in Figur 2 schematisch dargestellten Diagramm zeigt die Abszisse die drei Signale S1, S2 und S3 während an der Ordinate die senderseitig geschätzte Empfangsleistung für die drei Signale S1, S2, S3 für jeweils zwei Werte der Sendeleistung sowie die Werte dreier vorgegebener Empfangsleistungsintervalle I1, I2, I3 ablesbar sind. Die Position der Signale S1, S2, S3 auf der Abszisse ist beispielsweise durch die Trägerfrequenz des entsprechenden Subträgers gegeben.

Sowohl der Basisstation NodeB als auch der Teilnehmerstation UE sind die vorgegebenen Empfangsleistungsintervalle I1, I2, I3 bekannt. Das erste vorgegebene Empfangsleistungsintervall I1 hat als obere Grenze einen Empfangsleistungswert G1 und als untere Grenze einen Empfangsleistungswert G2. Die untere Grenze des ersten Empfangsleistungsintervalls I1 ist gleichzeitig die obere Grenze des zweiten Empfangsleistungsintervalls I2. Die untere Grenze des zweiten Empfangsleistungsintervalls I2 hat den Wert G3 der gleichzeitig die obere Grenze des dritten Empfangsleistungsintervalls I3 ist. Die untere Grenze des dritten Empfangsleistungsintervalls I3 ist G4. Es gilt G1 > G2 > G3 > G4.

Aufgrund der ihr bekannten Kanalzustandsinformation für den ersten Subträger auf dem das erste Signal S1 gesendet wird, schätzt die Basisstation NodeB für einen für den ersten Subträger vorbestimmten ersten Wert der Sendeleistung einen durch ein erstes Kreuz K1 dargestellten ersten Wert P1 der Empfangsleistung des ersten Signals S1. Der erste geschätzte Wert P1 der Empfangsleistung liegt in dem ersten Empfangsleistungsintervall I1 und liegt in der Nähe der oberen Grenze G1 des ersten Empfangsleistungsintervalls I1. Die Basisstation NodeB wählt einen tatsächlich zum Senden des ersten Signals S1 verwendeten zweiten Wert der Sendeleistung derart, dass ein anhand des zweiten Wertes der Sendeleistung geschätzter zweiter Wert P1' der Empfangsleistung des ersten Signals, dargestellt durch ein erstes Kreuz im Kreis K1', in der Mitte des ersten Empfangsleistungsintervalls I1 liegt. Der geschätzte zweite Wert P1' der Empfangsleistung des ersten Signals S1 liegt somit bei (G2-G1)/2.

Für das zweite und das dritte Signal S2, S3 schätzt die Basisstation NodeB ebenfalls für jeweils einen vorbestimmten ersten Wert der Sendeleistung der Signale S2, S3 jeweils einen ersten Wert P2, P3 der Empfangsleistung. Für das zweite Signal S2 ergibt sich P2 als erster geschätzter Wert der Empfangsleistung und für das dritte Signal S3 ergibt sich P3 als erster geschätzter Wert der Empfangsleistung. Die ersten geschätzten Werte P2, P3 der Empfangsleistung des zweiten und dritten Signals S2, S3 sind in dem Diagramm durch ein zweites und ein drittes Kreuz K2, K3 dargestellt.

In dem Ausführungsbeispiel zu Figur 2 hat für alle Subträger der jeweilige vorbestimmte erste Wert der Sendeleistung den gleichen Zahlenwert. Selbstverständlich kann jedoch auch für jeden Subträger ein individueller vorbestimmter erster Wert der Sendeleistung verwendet werden.

Die Basisstation NodeB verwendet zum Senden der zweiten und dritten Signale S2, S3 jeweils einen zweiten Wert der Sendeleistung, so dass für den jeweiligen zweiten Wert der Sendeleistung geschätzte zweite Werte P2', P3' der Empfangsleistung des zweiten und dritten Signals S2, S3 jeweils in der Mitte der Empfangsleistungsintervalle liegen, in denen die zuvor für die jeweiligen vorbestimmten ersten Werte der Sendeleistung geschätzten Werte P2, P3 der Empfangleistung lagen. Die für den jeweiligen zweiten Wert der Sendeleistung geschätzten zweiten Werte P2' P3' der Empfangsleistung sind durch ein zweites und drittes Kreuz im Kreis K2', K3' dargestellt. Der zweite geschätzte Wert P2' der Empfangsleistung des zweiten Signals S2 liegt in der Mitte des zweiten Empfangsleistungsintervalls I2 und der zweite geschätzte Wert P3' der Empfangsleistung des dritten Signals S3 liegt in dem dritten Empfangsleistungsintervall I3.

In der Basisstation NodeB und der Teilnehmerstation UE ist eine Zuordnung der drei Empfangsleistungsintervalle I1, I2, I3 zu jeweils einer Modulationsart, beispielsweise in Form einer Tabelle, bekannt. Die Basisstation NodeB wählt zum Senden für die drei Signale S1, S2 und S3 jeweils diejenige Modulationsart aus, die dem Empfangsleistungsintervall zugeordnet ist, in dem der jeweils erste geschätzte Werte P1, P2, P3 der Empfangsleistung liegt. Als Sendeleistung der drei Signale S1, S2, S3 verwendet die Basisstation NodeB den jeweiligen zweiten Wert der Sendeleistung. Dadurch liegen auch die tatsächlich von der Teilnehmerstation UE gemessenen Werte der Empfangsleistung der Signale S1, S2, S3 mit einer größeren Wahrscheinlichkeit innerhalb der entsprechenden Empfangsleistungsintervalle I1, I2, I3 als dies beim Verwenden des jeweils vorbestimmten ersten Wertes der Sendeleistung der Fall wäre. Anhand der gemessenen Werte der Empfangsleistung der Signale S1, S2, S3 ermittelt die Teilnehmerstation UE das dem jeweiligen Empfangsleistungsintervall zugeordnete Modulationsverfahren und demoduliert die Signale S1, S2, S3 durch Umkehr des entsprechenden Modulationsverfahrens.

Bei den auf den Subträgern gesendeten Signalen S1, S2, S3 kann es sich beispielsweise um Pilotsignale handeln, die der Teilnehmerstation UE - zusätzlich zum Ermitteln von für Signale der Subträger verwendeten Modulationsverfahren - auch zur Schätzung des Übertragungskanals des entsprechenden Subträgers dienen. In diesem Fall kann für nachfolgend auf den Subträger gesendete Signale, die beispielsweise zum Übertragen von Nutzdaten wie Bild- und/oder Sprachdaten dienen, ein erneutes empfängerseitiges Ermitteln des jeweiligen Modulationsverfahrens entfallen, vorausgesetzt, dass empfängerseitig davon ausgegangen werden kann, dass sich die Übertragungsbedingungen seit dem Empfang der Pilotsignale nicht wesentlich verändert haben. Die Basisstation NodeB sendet daher die Pilotsignale mit einer Wiederholrate, die umso größer ist je schneller sich die Übertragungseigenschaften für Signale der Subträger ändern.

Im dritten Empfangsleistungsintervall I3 liegen kleinere Werte der Empfangsleistung als in dem ersten und dem zweiten Empfangsleistungsintervall I2, I3. Bei einem schlechten Signal-zu-Rausch-Verhältnis kann es daher vorkommen, dass die Teilnehmerstation UE einen Wert der Empfangsleistung misst der wesentlich vom dem zuvor von der Basisstation NodeB geschätzten Wert der Empfangsleistung abweicht. Um zu verhindern, dass in einem derartigen Fall der tatsächlich gemessene Wert der Empfangsleistung außerhalb des dritten Empfangsleistungsintervalls I3 liegt und somit von der Teilnehmerstation UE ein anderes als das zuvor von der Basisstation NodeB ausgewählte Modulationsverfahren ermittelt wird, ist das dritte Empfangsleistungsintervall I3 breiter als das zweite Empfangsleistungsintervall I2, da das zweite Empfangsleistungsintervall I2 größere Werte der Empfangsleistung aufweist, als das dritte Empfangsleistungsintervall I3. Das zweite Empfangsleistungsintervall I2 wiederum ist breiter als das erste Empfangsleistungsintervall I1, da das erste Empfangsleistungsintervall I1 größere Werte der Empfangsleistung aufweist als das zweite Empfangsleistungsintervall I2. Die Breite der Empfangsleistungsintervalle I1, I2, I3 kann beispielsweise so gewählt werden, dass statistisch betrachtet die Wahrscheinlichkeit für die Teilnehmerstation UE ein falsches Modulationsverfahren anhand des von ihr ermittelten Empfangsleistungsintervalls auszuwählen, für alle Empfangsleistungsintervalle ungefähr den gleichen Wert hat.

Dadurch, dass erfindungsgemäß die tatsächlich zum Senden von Signalen einzelner Subträger verwendete Sendeleistung nicht fest vorgegeben ist, sondern an die Übertragungseigenschaften des Übertragungskanals bei der Frequenz des jeweiligen Subträgers derart angepasst wird, dass die geschätzten Werte der Empfangsleistung jeweils in der Mitte eines Empfangsleistungsintervalls liegen, wird erreicht, dass die Teilnehmerstation UE mit größerer Wahrscheinlichkeit die richtige Modulationsart ermittelt, als dies der Fall wäre, wenn gemäß bekannter Verfahren alle Signale der Subträger von der Basisstation NodeB mit der gleichen Sendeleistung gesendet würden.

Selbstverständlich kann das erfindungsgemäße Verfahren auch dann vorteilhaft angewendet werden, wenn nur Signale eines Subträgers vorhanden sind, oder wenn eine wesentlich größere Anzahl von Subträgern verwendet wird als dies in Figur 2 dargestellt ist.

Das erfindungsgemäße Verfahren lässt sich selbstverständlich auch für Übertragungen von der Teilnehmerstation UE zur Basisstation NodeB verwenden.

Die Differenz zwischen den für die drei Signale S1, S2, S3 geschätzten zweiten und ersten Werten der Empfangsleistung, d.h. P1'-P1, P2'-P2 und P3'-P3, ist beispielsweise proportional zur entsprechenden Differenz der jeweiligen zweiten und ersten Werte der Sendeleistung der Basisstation NodeB. Wird wie in Figur 2 der gleiche erste vorbestimmte Wert der Sendeleistung für alle drei Signale S1, S2, S3 verwendet, kann direkt aus Figur 2 abgelesen werden, dass die zweiten Werte der Sendeleistung des ersten und dritten Signals S1, S3 kleiner sind als der erste vorbestimmte Wert der Sendeleistung, während für das zweite Signal S2 der zweite Wert der Sendeleistung größerer ist als der erste vorbestimmte Wert der Sendeleistung. Mittelt man jedoch über alle drei Signale S1, S2, S3, so wird beim Senden mit den jeweiligen zweiten Werten der Sendeleistung ungefähr die gleiche Gesamtsendeleistung benötigt, als wenn alle Signale S1, S2, S3 jeweils mit dem ersten vorbestimmten Wert der Sendeleistung gesendet worden wären. In dem Ausführungsbeispiel zu Figur 2 ist somit die Summe der zweiten Werte der Sendeleistung ungefähr gleich dem dreifachen des ersten vorbestimmten Wertes der Sendeleistung. Im Mittel wir somit für das erfindungsgemäße Verfahren keine zusätzliche Sendeleistung benötigt. Statistisch gesehen gilt dies umso mehr, je mehr Signale über unterschiedliche Subträger gesendet werden.

In einer Ausgestaltung der Erfindung wird der für die Signale S1, S2, S3 verwendete zweite Sendeleistungswert von der Basisstation NodeB unter Berücksichtigung von senderseitig ermittelten aktuellen Kanaleigenschaften kontinuierlich derart angepasst, dass weitere mit der angepassten Sendeleistung auf den Subträgern gesendete Signale ebenfalls mit dem für die Signale S1, S2, S3 geschätzten zweiten Wert der Empfangsleistung von der Teilnehmerstation UE empfangen werden. Auf diese Weise ist eine empfängerseitige Kanalschätzung, d.h. eine Kanalschätzung durch die Teilnehmerstation UE, erst dann erforderlich, wenn die Basisstation NodeB für Signale wenigstens eines Subträgers einen Wert der Sendeleistung wählt, für den sich ein geänderter geschätzter Wert der Empfangsleistung in einem anderen Empfangsleistungsintervall ergibt. Die Basisstation wählt beispielsweise einen Wert der Sendeleistung, für den sich ein geänderter geschätzter Wert der Empfangsleistung in einem anderen Empfangsleistungsintervall ergibt, wenn sich die Kanaleigenschaften so stark verändert haben, dass es z.B. energetisch günstiger ist, einen neuen Wert der Sendeleistung und eine neue Modulationsart gemäß dem geänderten Empfangsleistungsintervall auszuwählen.

Selbstverständlich kann die Basisstation - wie im letzten Absatz beschrieben - durch kontinuierliche Anpassung ihrer Sendeleistung einen geschätzten Wert der Empfangsleistung auch dann konstant halten, wenn dieser nicht in der Mitte des Empfangsleistungsintervalls liegt.

## Patentansprüche

1. Verfahren zum Ermitteln eines Wertes der Sendeleistung für ein von einer sendenden Station (NodeB) an eine empfangende Station (UE) zu sendendes Signal (S1), bei dem
- senderseitig für einen ersten Wert der Sendeleistung die Lage eines voraussichtlichen ersten Wertes (P1) der Empfangsleistung der empfangenden Station (UE) in einem vorgegebenen Empfangsleistungsintervall (I1) geschätzt wird
- und ein zum Senden zu verwendender zweiter Wert der Sendeleistung senderseitig derart ermittelt wird, dass bei dessen Verwendung ein voraussichtlicher zweiter Wert (P1') der Empfangsleistung näher an der Mitte des vorgegebenen Empfangsleistungsintervalls (I1) liegt, als der voraussichtliche erste Wert (P1) der Empfangsleistung.

2. Verfahren nach Anspruch 1,
**dadurch gekennzeichnet,**
**dass** eine zum Senden des Signals (S1) verwendete Modulationsart senderseitig in Abhängigkeit davon ausgewählt wird, in welchem von wenigstens zwei vorgegebenen Empfangsleistungsintervallen (I1, I2, 13) der senderseitig für den ersten Wert der Sendeleistung geschätzte voraussichtliche erste Wert (P1) der Empfangsleistung liegt.

3. Verfahren nach einem der vorstehenden Ansprüche,
**dadurch gekennzeichnet,**
**dass** der zum Senden zu verwendende zweite Wert der Sendeleistung senderseitig so ermittelt wird, dass bei dessen Verwendung der voraussichtliche zweite Wert (P1') der Empfangsleistung im Wesentlichen in der Mitte des vorgegebenen Empfangsleistungsintervalls (I1) liegt.

4. Verfahren nach einem der vorstehenden Ansprüche,
**dadurch gekennzeichnet,**
**dass** die Verfahrensschritte entsprechend für weitere Signale (S2, S3) durchgeführt werden, die gleichzeitig mit dem Signal (S1) von der sendenden Station (NodeB) an die empfangende Station (UE) gesendet werden, wobei ein von der sendenden Station (NodeB) zu übertragendes Symbol (SYM) aus all diesen Signalen (S1, S2, S3) zusammengesetzt ist und die Signale (S1, S2, S3) mittels unterschiedlicher Trägerfrequenzen gesendet werden.

5. Verfahren nach einem der vorstehenden Ansprüche,
**dadurch gekennzeichnet,**
**dass** als Signal (S1) und als weitere Signale (S2, S3) Pilotsignale verwendet werden.

6. Verfahren nach einem der vorstehenden Ansprüche,
**dadurch gekennzeichnet,**
**dass** ein erstes vorgegebenes Empfangsleistungsintervall (I1, 12) breiter ist als ein zweites vorgegebenes Empfangsleistungsintervall (I2, I3), und dass die Empfangsleistungen des ersten vorgegebenen Empfangsleistungsintervalls (I1, 12) kleiner sind, als die Empfangsleistungen des zweiten vorgegebenen Empfangsleistungsintervalls (I2, I3).

7. Verfahren nach einem der vorstehenden Ansprüche,
**dadurch gekennzeichnet,**
**dass** als erster Wert der Sendeleistung ein vorbestimmter Wert verwendet wird.

8. Vorrichtung (P) zum Ermitteln eines Wertes der Sendeleistung für ein von einer sendenden Station (NodeB) an eine empfangende Station (UE) zu sendendes Signal (S1, S2, S3),
- mit Mitteln (P) zum Schätzen der Lage eines voraussichtlichen ersten Wertes (P1, P2, P3) der Empfangsleistung der empfangenden Station (UE) in einem vorgegebenen Empfangsleistungsintervall (I1, I2, 13) für einen ersten Wert der Sendeleistung,
- mit Mitteln (P) zum Ermitteln eines zum Senden zu verwendenden zweiten Wertes der Sendeleistung derart, dass bei dessen Verwendung ein voraussichtlicher zweiter Wert (P1', P2', P3') der Empfangsleistung näher an der Mitte des vorgegebenen Empfangsleistungsintervalls (I1, I2, 13) liegt, als der voraussichtliche erste Wert (P1, P2, P3) der Empfangsleistung.
